# EUROPÄISCHE PATENTSCHRIFT

(11) **EP 2 366 216 B1**
(45) Veröffentlichungstag und Bekanntmachung des Hinweises auf die Patenterteilung: **03.04.2019**
(21) Anmeldenummer: 09760791.5
(22) Anmeldetag: 09.11.2009
(51) Int. Cl.: H02M 3/335, H02M 1/36, H02M 1/00

(54) **STEUERUNG FÜR EIN ELEKTRISCH VERSTELLBARES MÖBEL**
CONTROL FOR AN ELECTRICALLY ADJUSTABLE ITEM OF FURNITURE
COMMANDE POUR UN MEUBLE POUVANT ÊTRE DÉPLACÉ ÉLECTRIQUEMENT

(30) Priorität: 12.11.2008 DE 102008056914
(43) Veröffentlichungstag der Anmeldung: 21.09.2011
(73) Patentinhaber: Logicdata Electronic & Software Entwicklungs GmbH, 8530 Deutschlandsberg (AT)
(72) Erfinder: KOCH, Walter, A-8541 Schwanberg (AT); SCHENK, Mario, A-8524 Bad Gams (AT)
(74) Vertreter: Epping - Hermann - Fischer
(86) Internationale Anmeldenummer: PCT/EP2009/064857
(87) Internationale Veröffentlichungsnummer: WO 2010/055016

(56) Entgegenhaltungen:
- EP-A2- 0 085 219
- EP-A2- 1 330 016
- EP-A2- 1 376 841
- DE-A1- 3 427 600
- DE-A1- 10 036 973
- DE-A1- 10 050 380
- DE-A1- 10 205 706
- DE-A1-102005 037 409
- DE-A1-102006 053 353
- DE-T1- 10 196 155
- DE-U1- 9 405 297
- DE-U1- 20 021 261
- DE-U1-202006 010 135
- GB-A- 2 356 498
- JP-A- 2000 224 844
- US-A- 5 668 705
- US-A1- 2004 042 239
- US-B2- 6 903 945
- INFINEON TECHNOLOGIES: "ICs for Consumer Electronics - Controller for Switch Mode Power Supplies Supporting Low Power Standby and Power Factor Correction, TDA16846/TDA 16847, Data Sheet", 20000114 , no. TDA 16846/ TDA 16847 14 January 2000 (2000-01-14), pages 1-28, XP002505677, Retrieved from the Internet: URL:http://pdf1.alldatasheet.com/datasheet -pdf/view/82042/INFINEON/TDA16846.html [retrieved on 2016-02-17]

## Beschreibung

Die Erfindung betrifft eine Steuerung mit einem Steuerteil, das zur Ansteuerung eines elektrisch verstellbaren Möbels eingerichtet ist, und mit einem Schaltnetzteil.

Es werden zunehmend elektrisch verstellbare Möbel angeboten. So ist bei vielen Tischen, insbesondere bei Schreibtischen, die Höhe der Tischplatte über einen speziellen Antrieb elektrisch verstellbar. Auch Betten, beispielsweise Komfortbetten oder Krankenhausbetten, lassen sich über elektrische Antriebe etwa in Höhe oder Neigungswinkel des Bettes einstellen.

Dabei ist es möglich Gleichstrommotoren für den Antrieb der elektrischen Verstelleinrichtung einzusetzen, die mit einer Niederspannung betrieben werden. Dafür wird die Netzspannung beispielsweise über einen Transformator in den niedrigeren Spannungsbereich der Gleichstrommotoren herabgesetzt und über eine Gleichrichterschaltung in eine Gleichspannung umgewandelt. Die Ansteuerung der Gleichstrommotoren in einer zugeordneten Steuerung erfolgt durch ein gesteuertes Verbinden der Motoren mit der Gleichspannung. Eine derartige Steuerung kann alternativ zum Transformator auch durch ein externes Schaltnetzteil mit der erforderlichen Gleichspannung versorgt werden.

Eine weitere Möglichkeit für einen Antrieb eines elektrisch verstellbaren Möbels liegt in der Verwendung eines oder mehrerer Wechselstrommotoren, für die ebenfalls eine Steuerung vorgesehen ist. In diesem Fall kann für die Steuerung die Netzwechselspannung in einen niedrigeren Wechselspannungsbereich herab transformiert werden, um mit der herab transformierten Wechselspannung die Wechselstrommotoren gesteuert zu verbinden. Alternativ kann eine Wechselspannung zum Ansteuern der Wechselstrommotoren aus einer Gleichspannung abgeleitet werden, welche über ein externes Schaltnetzteil bereitgestellt wird.

Beim Einsatz eines externen Schaltnetzteils ist es notwendig, Steuerung und Schaltnetzteil getrennt beziehungsweise jeweils einzeln, also mit höherem Produktionsaufwand, an dem verstellbaren Möbel anzubringen.

Der Produktionsaufwand und die Betriebskosten einer Steuerung werden auch durch den Leistungsbedarf der Steuerung beeinflusst.

Transformatoren zum Heruntertransformieren der Netzwechselspannung weisen, bedingt durch die geforderten Leistungen, üblicherweise einen derartigen Platzbedarf auf, dass eine Integration der Transformatoren in einem Gehäuse zusammen mit einer Steuerung große Gehäusegrößen bedingt. Derartige Baugrößen können aber die Anordnung beziehungsweise Befestigung einer Steuerung an einem zu verstellenden Möbel erschweren und bedingen hohe Kosten.

Das Dokument JP 2000-224844 A beschreibt die Merkmale des Oberbegriffs des Patentanspruchs 1.

Eine zu lösende Aufgabe besteht darin, eine kostengünstige Steuerung für ein elektrisch verstellbares Möbel bereitzustellen.

Diese Aufgabe wird mit dem Gegenstand des unabhängigen Patentanspruchs gelöst. Ausgestaltungsformen und Weiterbildungen der Erfindung sind Gegenstand der Unteransprüche.

Bei einer beispielhaften Ausführungsform einer Steuerung sind ein Steuerteil, das zur Ansteuerung eines elektrisch verstellbaren Möbels eingerichtet ist, und ein das Steuerteil versorgendes Schaltnetzteil in ein gemeinsames Gehäuse der Steuerung integriert, wobei das Schaltnetzteil eingerichtet ist, in Abhängigkeit eines Bereitschaftssignals in einen Ruhebetriebszustand geschaltet zu werden.

Durch die Integration des Steuerteils und des Schaltnetzteils in einem gemeinsamen Gehäuse der Steuerung lassen sich unter anderem Materialkosten einsparen. Beispielsweise lässt sich ein Schaltnetzteil, welches etwa in seiner Leistung an den Bedarf der Steuerung angepasst ist, in kleinerer Bauart als ein entsprechender Transformator mit vergleichbarer Leistung ausführen. Dementsprechend kann auch das Gehäuse der Steuerung, welches das Schaltnetzteil mit aufnimmt, kleiner ausgeführt werden als bei herkömmlichen Lösungen. Ein derartiges Gehäuse lässt sich somit auch leichter und unter optischen Gesichtspunkten besser an einem verstellbaren Möbel anbringen.

Dadurch, dass das Schaltnetzteil durch das Bereitschaftssignal in einen Ruhebetriebszustand geschaltet werden kann, kann der mittlere Leistungsbedarf der Steuerung, insbesondere des Schaltnetzteils reduziert werden. Dies senkt unter anderem die Betriebskosten der Steuerung. Zusätzlich kann aber auch das Schaltnetzteil für eine geringere Dauerleistung ausgelegt werden, was den Herstellungsaufwand und die Kosten des Schaltnetzteils reduziert. Vornehmlich ist das Bereitschaftssignal als logisches Signal ausgeführt.

Vorzugsweise ist das Schaltnetzteil dazu eingerichtet, eine Gleichspannung abzugeben, die sich von dem Steuerteil zur Erzeugung wenigstens einer Ausgangsspannung der Steuerung verwenden lässt. Die Ausgangsspannung der Steuerung wird dabei üblicherweise einem oder mehreren Elektromotoren zugeführt, welche sowohl als Gleichstrom- oder als Wechselstrommotoren ausgeführt sein können.

Das Schaltnetzteil weist eine erste und eine zweite Stufe auf, wobei die erste Stufe dazu eingerichtet ist, eine Zwischenspannung aus einer am Schaltnetzteil eingangsseitig anliegenden Netzspannung zu erzeugen. Die zweite Stufe ist dementsprechend dazu eingerichtet, die Gleichspannung im geschalteten Betrieb aus der Zwischenspannung zu erzeugen. Die zweite Stufe umfasst dazu einen Schaltregler.

Das Schaltnetzteil kann in einem Normalbetriebszustand und in dem Ruhebetriebszustand betrieben werden. Im Normalbetriebszustand gibt das Schaltnetzteil eine Versorgungsspannung für das Steuerteil ab. Im Ruhebetriebszustand wird vom Schaltnetzteil nur eine Spannung mit geringer Lastfähigkeit oder gar keine Spannung abgegeben. Beispielsweise weist die zweite Stufe einen Schaltreglerbaustein zur Erzeugung der Gleichspannung auf, welcher den geschalteten Betrieb zur Erzeugung der Gleichspannung aus der Zwischenspannung steuert. Das Schaltnetzteil ist hierbei dazu eingerichtet, eine Versorgungsspannung für den Schaltreglerbaustein in dem Ruhebetriebszustand durch eine Anlaufschaltung getaktet und in dem Normalbetriebszustand durch eine Betriebsversorgungsschaltung dauerhaft bereitzustellen.

Somit wird im Ruhebetriebszustand eine Steuerung von Schaltvorgängen in der zweiten Stufe abgeschaltet, sodass bei nicht benötigter Ausgangsgleichspannung das Auftreten von Verlustleistung infolge unnötiger Schaltvorgänge minimiert wird. Durch die getaktete Versorgung des Schaltreglerbausteins befindet sich das Schaltnetzteil jedoch in einem Zustand, welcher einen schnellen Wechsel in dem Normalbetriebszustand ermöglicht, bei dem entsprechende Leistung am Ausgang des Schaltnetzteils bereitgestellt wird.

Die Anlaufschaltung ist dazu eingerichtet, die Versorgungsspannung für den Schaltreglerbaustein aus der Zwischenspannung abzuleiten, welche von der ersten Stufe bereitgestellt wird.

Die Anlaufschaltung weist hierzu einen Energiespeicher und ein Widerstandselement auf. Der Energiespeicher und das Widerstandselement sind dabei derart dimensioniert, dass im Ruhebetriebszustand eine Zeitspanne zum Aufladen des Energiespeichers größer ist als eine Zeitspanne zum Entladen des Energiespeichers durch den Scteltreglerbaustein. Anders ausgedrückt erfolgt im Ruhebetriebszustand eine Spannungsversorgung des Schaltreglerbausteins über den Energiespeicher. Dieser wird über das Widerstandselement, welches vorzugsweise hochohmig gewählt wird, aufgeladen, wobei sich durch einen Widerstandswert des Widerstandselements ein bestimmter Ladestrom ergibt. Der Strom, der während des Betriebs beziehungsweise des Initialisierens des Schaltreglerbausteins benötigt wird und aus dem Energiespeicher gezogen wird, ist höher als der Ladestrom, sodass der Energiespeicher schneller entladen wird als er durch das Widerstandselement über die Zwischenspannung aufgeladen wird. Durch das Laden und Entladen des Energiespeichers ergibt sich ein getakteter Betrieb des Schaltreglerbausteins.

In einer Ausführungsform ist die Betriebsversorgungsschaltung dazu eingerichtet, die Versorgungsspannung für den Schaltreglerbaustein aus einer Hilfsspannung in der zweiten Stufe abzuleiten. Beispielsweise wird diese Hilfsspannung lediglich im geschalteten Betrieb der zweiten Stufe erzeugt, sodass die Versorgungsspannung im Ruhebetriebszustand von der Betriebsversorgungsschaltung nicht zur Verfügung gestellt wird. Zudem ist die Betriebsversorgungsschaltung beispielsweise in Abhängigkeit des Bereitschaftssignals deaktivierbar. In diesem Fall wird in Abhängigkeit des Bereitschaftssignals die Versorgungsspannung für den Schaltreglerbaustein auch dann nicht zur Verfügung gestellt, wenn die genannte Hilfsspannung im geschalteten Betrieb der zweiten Stufe vorliegt.

In einer speziellen Ausführungsform ist das Bereitschaftssignal der Betriebsversorgungsschaltung über einen Optokoppler zuführbar. Somit kann eine galvanische Trennung der Betriebsversorgungsschaltung von einem Schaltungsteil erreicht werden, in dem das Bereitschaftssignal erzeugt, verarbeitet oder weitergeleitet wird. Beispielsweise wird das Bereitschaftssignal von dem Steuerteil in Abhängigkeit eines Lastzustands erzeugt. Dies kann zum Beispiel dann der Fall sein, wenn das Steuerteil keinen Leistungsbedarf zur Ansteuerung beispielsweise eines Motors hat.

In einer weiteren Ausführungsform wird das Bereitschaftssignal von der zweiten Stufe in Abhängigkeit eines Werts der Gleichspannung erzeugt. Beispielsweise kann detektiert werden, ob die Gleichspannung einen vorbestimmten Wert überschreitet, sodass in diesem Fall durch das Umschalten in den Ruhebetriebszustand ein weiteres Erzeugen der zu hohen Gleichspannung verhindert wird.

In einer Ausführungsform umfasst die zweite Stufe einen Transformator, dessen Wicklungen für eine Kurzzeitbelastung ausgelegt sind. Beispielsweise ist der Transformator primärseitig an entsprechende Schaltmittel angeschlossen, welche die Zwischenspannung in Abhängigkeit einer Steuerung durch den Schaltreglerbaustein umsetzen. Auf der Sekundärseite des Transformators wird die abzugebende Gleichspannung erzeugt. Dadurch, dass im Ruhebetriebszustand kein Schaltbetrieb stattfindet und der Transformator daher unbelastet bleibt, kann der Transformator so dimensioniert werden, dass in kurzer Zeit hohe Ströme von dem Transformator verarbeitet werden können. Eine damit verbundene Erwärmung des Transformators ist wegen der in den Ruhephasen möglichen Abkühlung vertretbar.

Beispielsweise weist der Transformator eine vergleichsweise geringe Wicklungszahl auf, wobei ein Durchmesser der Wicklungen vergleichsweise groß gewählt wird, jeweils bezogen auf einen herkömmlichen Transformator eines herkömmlichen Schaltnetzteils. Dadurch weist der Transformator eine niedrige Induktivität auf, welche einen höheren Magnetisierungsstrom und damit höhere Kernverluste bedingt, die bei Dauerbetrieb ungünstig wären. Bei einem herkömmlichen Schaltnetzteil fließt ein Magnetisierungsstrom im Transformator auch dann, wenn sekundär kein Strom entnommen wird. In diesem Fall würde sich der Transformator auch im Leerlauf erwärmen. Durch den Ruhebetriebszustand kann sich der Transformator jedoch ausreichend abkühlen.

In einer Ausführungsform des Transformators wird ein Wicklungsdrahtdurchmesser des Transformators durch Parallelschalten mehrerer dünner Drähte erhöht. Dies führt zu einer verbesserten Stromverteilung in den Wicklungen, da auf Grund der Stromverdrängung bei den auftretenden Frequenzen ein einzelner Draht mit größerem Wicklungsdrahtdurchmesser ungleichmäßig belastet werden kann.

In einer besonderen Ausführungsform ist die erste Stufe dazu eingerichtet, eine erste oder eine wenigstens zweite Betriebsart einzunehmen, wobei in der ersten und der wenigstens einen zweiten Betriebsart die Zwischenspannung in unterschiedlicher Weise aus der Netzspannung erzeugt wird. Beispielsweise wird beim Erzeugen der Zwischenspannung in der ersten Betriebsart eine Zweiweggleichrichtung der eingangsseitig anliegenden Netzspannung und in der wenigstens einen zweiten Betriebsart eine Einweggleichrichtung durchgeführt.

Bei einer Zweiweggleichrichtung ergibt sich die Zwischenspannung in bekannter Weise im Wesentlichen aus der Spannungsamplitude der Netzwechselspannung. Bei einer Einweggleichrichtung erfolgt eine Spannungsverdopplung basierend auf der Amplitude der Netzwechselspannung. Um zwischen den wenigstens zwei Betriebsarten umschalten zu können, ist ein entsprechendes Schaltmittel in der ersten Stufe des Schaltnetzteils vorgesehen.

Beispielswiese erfolgt ein Umschalten zwischen der ersten und der wenigstens einen zweiten Betriebsart in Abhängigkeit eines Spannungswerts der Netzspannung. Für eine höhere Netzspannung von zirka 230 Volt, die im europäischen Raum üblich ist, kann beispielsweise die Betriebsart mit Zweiweggleichrichtung gewählt werden, um eine bestimmte Zwischenspannung am Ausgang der ersten Stufe des Schaltnetzteils zu erhalten. Beim Vorliegen einer niedrigeren Netzspannung von zum Beispiel 115 Volt, wie sie zum Beispiel auf dem nordamerikanischen Kontinent bereit gestellt ist, kann die zweite Betriebsart, bei der über eine Einweggleichrichtung eine Spannungsverdopplung erfolgt, gewählt werden, um eine der ersten Betriebsart entsprechende Zwischenspannung zu erhalten. Somit können in Abhängigkeit eines Spannungswerts der jeweiligen Netzspannung jeweils Betriebsarten gewählt werden, in denen sich Zwischenspannungen im gleichen Spannungsbereich erzeugen lassen. Eine derartige Steuerung lässt sich deshalb im Wesentlichen unabhängig von einem Spannungswert einer zur Verfügung stehenden Netzspannung mit dem verstellbaren Möbel verwenden.

In einer weiteren Ausführungsform der Steuerung weist das Schaltmittel eine Detektionseinrichtung, eine Ansteuereinrichtung und einen Schalter zum Auswählen der Betriebsart auf. Die Detektionseinrichtung ist zum Detektieren wenigstens eines durch einen Referenzwert festgelegten Spannungsbereichs der Netzspannung eingerichtet. Dementsprechend kann die Ansteuereinrichtung ein Steuersignal in Abhängigkeit des wenigstens einen detektierten Spannungsbereichs erzeugen. Die Betriebsart wird durch den Schalter in Abhängigkeit des von der Ansteuereinrichtung erzeugten Steuersignals ausgewählt.

In diesem Ausführungsbeispiel wird demnach die jeweils geeignete Betriebsart automatisch aus der zur Verfügung stehenden Netzspannung abgeleitet. Während in verschiedenen Ausführungsbeispielen die Auswahl der Betriebsart auch manuell erfolgen kann, ist in diesem Ausführungsbeispiel die Gefahr einer Fehlbedienung beziehungsweise Fehleinstellung verringert. Eine Spannungsversorgung des Schaltmittels kann durch die zweite Stufe beziehungsweise aus der zweiten Stufe heraus erfolgen. Beispielsweise kann insbesondere eine Spannungsversorgung für die Detektionseinrichtung und/oder die Ansteuereinrichtung aus einem besonders hierfür vorgesehenen Schaltungsteil der zweiten Stufe des Schaltnetzteils erfolgen.

In einer weiteren Ausführungsform einer Steuerung weist diese ein Bedienteil auf, das mit dem Schaltnetzteil und dem Steuerteil eine integrierte Einheit bildet. Beispielswiese kann es durch die kleinere Bauform der Steuerung möglich sein, diese beispielsweise so unterhalb einer Tischkante anzubringen, dass lediglich das mit dem Schaltnetzteil und dem Steuerteil integrierte Bedienteil für einen Benutzer des verstellbaren Möbels zugänglich ist. Dies bedeutet eine weitere Reduktion des Montageaufwands, da das Bedienteil und das Gehäuse der Steuerung nicht mehr separat an das beziehungsweise die Möbel montiert werden müssen und Verlegearbeiten für ein Verbindungskabel zwischen der Steuerung und Bedienteil entfallen können.

Vorzugsweise ist das Bedienteil mittels einer Schnappverbindung oder einer Schraubverbindung an das Gehäuse der Steuerung montiert. Anders ausgedrückt kann das Bedienteil rein mechanisch mit dem Gehäuse der Steuerung verbunden sein. Dies ermöglicht eine besonders einfache Gestaltung des Bedienteils, da dieses kein elektrisches Teil wie einen Stecker oder einen Schalter enthält. Besonders kostengünstig ist das Bedienteil deshalb zum Beispiel als Spritzgussteil vollständig aus Kunststoff gefertigt.

Die Erfindung wird nachfolgend an Ausführungsbeispielen anhand der Figuren näher erläutert. Funktions- beziehungsweise wirkungsgleiche Elemente tragen dabei gleiche Bezugszeichen.

Es zeigen:
- Figur 1: ein Ausführungsbeispiel einer erfindungsgemäßen Steuerung,
- Figur 2: ein Ausführungsbeispiel eines Schaltnetzteils für eine erfindungsgemäße Steuerung,
- Figur 3: ein erstes Ausführungsbeispiel einer ersten Stufe des Schaltnetzteils,
- Figur 4: ein zweites Ausführungsbeispiel einer ersten Stufe eines Schaltnetzteils,
- Figur 5: ein erstes Ausführungsdetail eines Schaltnetzteils,
- Figur 6: ein zweites Ausführungsdetail eines Schaltnetzteils, und
- Figur 7: ein Ausführungsbeispiel einer Steuerung mit integrierbarem Bedienteil.

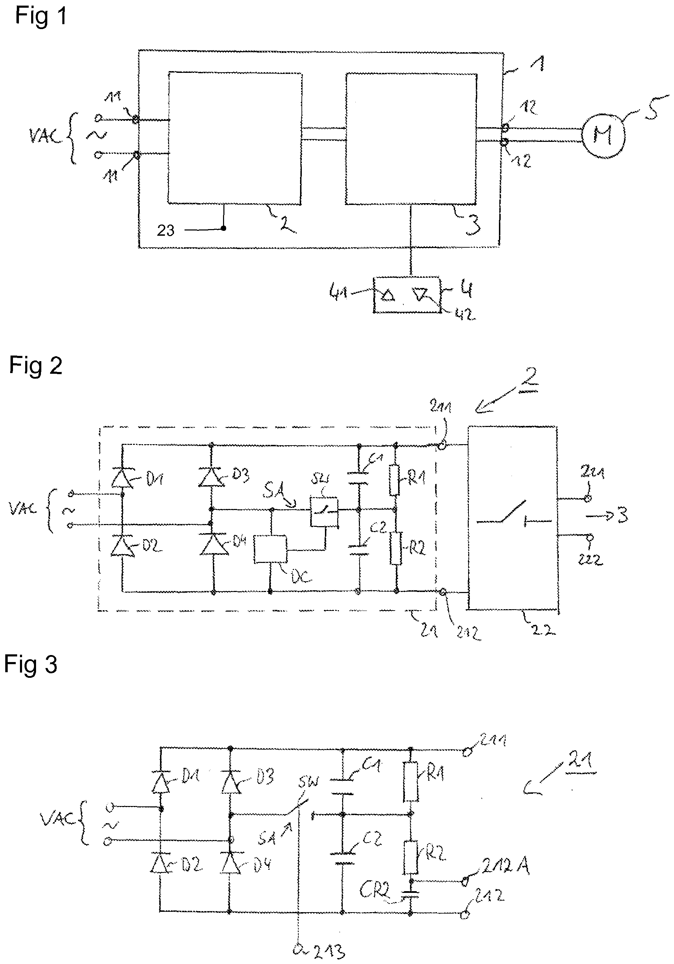

Figur 1 zeigt ein Ausführungsbeispiel einer Steuerung für ein elektrisch verstellbares Möbel. Die Steuerung umfasst ein Gehäuse 1, in dem ein Schaltnetzteil 2 und ein Steuerteil 3 vorgesehen sind. Das Schaltnetzteil 2 ist eingangsseitig über Eingangsanschlüsse 11 mit einem Netzanschluss VAC verbunden. Ausgangsseitig ist an das Schaltnetzteil 2 das Steuerteil 3 angeschlossen, welches an seinem Ausgang mit Ausgangsanschlüssen 12 des Gehäuses 1 gekoppelt ist. Das Schaltnetzteil 2 weist einen Steuereingang 23 auf, an dem ein Bereitschaftssignals zur Steuerung in einen Ruhebetriebszustand zugeführt werden kann. Das Bereitschaftssignal kann in verschiedenen Ausführungen von dem Steuerteil 3 bereitgestellt und/oder im Schaltnetzteil 2 selbst erzeugt und/oder extern zugeführt werden. An die Ausgangsanschlüsse 12 ist in diesem Ausführungsbeispiel ein Motor 5 angeschlossen, welcher eine Verstellung des verstellbaren Möbels bewirken kann. An das Steuerteil 3 ist ferner ein Bedienteil 4 angeschlossen, welches Bedienelemente 41, 42 aufweist.

Durch das Schaltnetzteil 2 kann eine am Netzanschluss VAC anliegende Netzwechselspannung in eine üblicherweise niedrigere Gleichspannung umgesetzt werden, welche von dem Steuerteil 3 zur Ansteuerung des Motors 5 verwendet werden kann. Obwohl in diesem Ausführungsbeispiel lediglich ein Motor 5 dargestellt ist, ist es dennoch ohne weiteres möglich, mehrere Motoren gemeinsam oder unabhängig voneinander über das Steuerteil 3 anzusteuern. Eine Bedienung der Steuerung erfolgt beispielsweise über die Bedienelemente 41, 42, welche eine Ansteuerung des Motors 5 durch das Steuerteil 3 bewirkt.

Der Eingangsanschluss 11 des Gehäuses 1 ist beispielsweise als herkömmliche Netzanschlussbuchse für gebräuchliche Netzanschlusskabel ausgeführt. Alternativ kann jedoch ein fest installiertes Kabel zum Anschluss an den Netzanschluss VAC vorgesehen werden. In ähnlicher Weise können der Motor beziehungsweise die Motoren über ein fest angeschlossenes Kabel oder alternativ über einen speziellen Motoranschluss als Ausgangsanschluss 12 mit dem Steuerteil 3 verbunden werden.

Das Bedienteil 4, das in diesem Ausführungsbeispiel als separate, über ein Bedienkabel an das Steuerteil 3 angeschlossene Baugruppe ausgeführt ist, kann in weiteren Ausführungsbeispielen auch direkt in das Gehäuse 1 integriert sein beziehungsweise derart mit dem Gehäuse 1 mechanisch verbunden sein, dass das Bedienteil 4 und das Gehäuse 1 eine integrierte Einheit bilden.

Ein Schaltnetzteil 2 gemäß dem vorliegenden Ausführungsbeispiel weist eine geringere Baugröße als ein Transformator herkömmlicher Bauart für eine entsprechende elektrische Leistung auf. Somit kann die Steuerung mit Schaltnetzteil 2 und Steuerteil 3 Platz sparend in einem kleineren Gehäuse 1 eingebaut werden, als dies mit herkömmlichen Transformatoren möglich wäre. Folglich kann eine derartige Steuerung auch mit geringerem Aufwand bezüglich Montage- und Produktionskosten an einem verstellbaren Möbel befestigt werden. Insbesondere kann die Steuerung in diesem Fall an ergonomisch und/oder optisch günstigeren Positionen des verstellbaren Möbels angebracht werden.

Die Größe des Schaltnetzteils und damit die Größe der gesamten Steuerung beziehungsweise des Gehäuses 1 der Steuerung hängt nicht nur von der benötigten maximalen elektrischen Leistung der Steuerung ab, sondern auch von einer zeitlichen Komponente, insbesondere einem Verhältnis zwischen erfahrungsgemäßen Werten für einen Lastfall und zwischen Lastfällen liegenden Ruhephasen. Beispielsweise wird ein Schaltnetzteil für eine Belastung von einer Minute bei darauf folgender Ruhephase von neun Minuten ausgelegt. Alternativ kann ein Schaltnetzteil für eine Belastung von zwei Minuten bei darauf folgender Ruhephase von achtzehn Minuten ausgelegt werden. Im Rahmen einer derartigen Dimensionierung kann die Baugröße des Schaltnetzteils 2 unter Umständen weiter reduziert werden. Dies wird unterstützt dadurch, dass das Schaltnetzteil 2 in den Ruhephasen durch das Bereitschaftssignal in einen Ruhebetriebszustand gesteuert werden kann, in dem sich das Schaltnetzteil und die gesamte Steuerung beispielsweise verbessert abkühlen können.

Figur 2 zeigt ein Ausführungsbeispiel eines Schaltnetzteils 2, welches beispielsweise für einen Einsatz in einer Steuerung gemäß dem Ausführungsbeispiel in Figur 1 geeignet ist. Das Schaltnetzteil 2 weist eine erste Stufe 21 und eine zweite Stufe 22 auf. Dabei ist die erste Stufe 21 eingangsseitig an den Netzanschluss VAC und ausgangsseitig über Anschlüsse 211, 212 an die zweite Stufe 22 angeschlossen. Für einen Ausgang 221, 222 der zweiten Stufe 22 ist ein Anschluss an das Steuerteil 3 vorgesehen.

Die erste Stufe 21 des Schaltnetzteils 2 weist vier Gleichrichterdioden D1, D2, D3, D4 auf, welche wie ein Brückengleichrichter verschaltet sind. Insbesondere ist eine Serienschaltung der ersten und zweiten Diode D1, D2 sowie eine Serienschaltung der dritten und vierten Diode D3, D4 zwischen die Anschlüsse 211, 212 geschaltet. Ferner ist eine Serienschaltung eines ersten und eines zweiten Kondensators C1, C2 zwischen die Anschlüsse 211, 212 geschaltet. Parallel zum ersten Kondensator C1 ist ein erster Widerstand R1 angeordnet. In ähnlicher Weise ist parallel zum zweiten Kondensator C2 ein zweiter Widerstand R2 vorgesehen.

Die erste Stufe 21 weist ferner ein Schaltmittel SA auf, welches eine Detektions- und Steuereinheit DC und einen Schalter SW umfasst. Die Detektions- und Steuereinheit DC ist zwischen einen Verbindungsknoten der dritten und vierten Diode D3, D4 und den zweiten Ausgangsanschluss 212 geschaltet. Der Schalter SW verbindet den Verbindungsknoten zwischen der dritten und vierten Diode D3, D4 mit dem Verbindungsknoten des ersten und zweiten Kondensators C1, C2 beziehungsweise des ersten und zweiten Widerstands R1, R2. Eine Steuerung des Schalters SW erfolgt über die Detektions- und Steuereinheit DC.

Über den Schalter SW kann in der ersten Stufe 21 eine erste oder eine zweite Betriebsart ausgewählt werden. Beispielsweise ist in der ersten Betriebsart der Schalter SW in einer geöffneten Stellung, so dass keine elektrische Verbindung zwischen den Knoten der Kondensatoren C1, C2 beziehungsweise Widerstände R1, R2 und dem Verbindungsknoten der Dioden D3, D4 besteht. In diesem Fall arbeitet die von der ersten Stufe 21 umfasste Schaltung als Brückengleichrichter, mit dem die eingangsseitig anliegende Netzwechselspannung in eine an den Anschlüssen 211, 212 anliegende Gleichspannung als Zwischenspannung umgewandelt wird.

Die Kondensatoren C1, C2 dienen dabei in bekannter Weise zur Speicherung elektrischer Energie und zur Glättung der bereitgestellten Zwischenspannung. Um einen Spannungsabfall über die Kondensatoren C1, C2 gleichmäßig verteilen zu können, kann über die Widerstände R1, R2 ein Potentialausgleich erfolgen, was schaltungstechnisch in etwa einem kompensierten kapazitiven Spannungsteiler entspricht. Vorzugsweise weisen die Widerstände R1, R2 dazu gleiche beziehungsweise nahezu gleiche Widerstandswerte auf. Weiterhin sind auch Kapazitätswerte der Kondensatoren C1, C2 vorzugsweise annähernd gleich groß. Der Wert der ausgangsseitigen Zwischenspannung an den Anschlüssen 211, 212 ergibt sich in bekannter Weise aus der Spannungsamplitude der eingangsseitig anliegenden Netzwechselspannung, welche im europäischen Raum ungefähr 400 Volt beträgt.

In der zweiten Betriebsart ist der Schalter SW in einem geschlossenen Zustand, so dass der Verbindungsknoten der Dioden D3, D4 elektrisch mit dem Verbindungsknoten der Kondensatoren C1, C2 und dem Verbindungsknoten der Widerstände R1, R2 verbunden ist. Dadurch ergibt sich mit den Dioden D1, D2 jeweils eine Einweggleichrichtung, bei der sowohl der erste als auch der zweite Kondensator C1, C2 auf den Wert der Spannungsamplitude der eingangsseitig anliegenden Netzwechselspannung aufgeladen werden. Die Dioden D3, D4 werden hierbei in Sperrrichtung betrieben. Dementsprechend ergibt sich zwischen den Anschlüssen 211, 212 über die Kondensatoren C1, C2 ungefähr eine Verdopplung der eingangsseitig anliegenden Spannungsamplitude. Beispielsweise wird bei einer eingangsseitig anliegenden effektiven Netzwechselspannung von etwa 115 Volt jeder der Kondensatoren C1, C2 auf einen Spannungswert von zirka 200 Volt aufgeladen. Dadurch ergibt sich zwischen den Anschlüssen 211, 212 als resultierende Gleichspannung eine Zwischenspannung von zirka 400 Volt. Diese Spannung entspricht demnach im Wesentlichen der Ausgangsgleichspannung beziehungsweise Zwischenspannung der ersten Stufe in der ersten Betriebsart bei einer effektiven Eingangsspannung von 230 Volt. Somit kann für verschiedene Spannungswerte von Eingangswechselspannungen eine ungefähr gleichgroße Ausgangsgleichspannung beziehungsweise Zwischenspannung an den Anschlüssen 211, 212 bereitgestellt werden.

In diesem Ausführungsbeispiel ist die Detektions- und Steuereinheit DC dazu eingerichtet, einen Spannungswert am Verbindungsknoten der dritten und vierten Diode D3, D4 auszuwerten und damit einen Spannungsbereich zu detektieren, in dem die eingangsseitig anliegende Netzwechselspannung liegt. Alternativ oder zusätzlich kann auch ein Spannungswert am Verbindungsknoten der ersten und zweiten Diode D1, D2 ausgewertet werden. In Abhängigkeit dieser Detektion kann der Schalter SW in einen geöffneten oder in einen geschlossenen Zustand gesteuert werden, wodurch die Schaltung in der ersten oder in der zweiten Betriebsart betrieben wird. Beispielsweise erfolgt die Entscheidung, ob die Schaltung in der ersten oder in der zweiten Betriebsart betrieben wird, anhand eines Schwellwerts oder Referenzwerts, welcher von der Netzspannung überschritten beziehungsweise unterschritten wird.

Die von der ersten Stufe 21 bereitgestellte Zwischenspannung wird in der zweiten Stufe 22 im geschalteten Betrieb, ausgedrückt durch das Schaltersymbol der zweiten Stufe 22, in die von dem Steuerteil 3 benötigte Spannung an den Anschlüssen 221, 222 umgesetzt.

Figur 3 zeigt ein Ausführungsbeispiel einer ersten Stufe 21 eines Schaltnetzteils 2, welches beispielsweise anstelle der ersten Stufe 21 in Figur 2 verwendet wird. Die erste Stufe 21 in Figur 3 weist im Wesentlichen die gleichen Elemente wie die in Figur 2 gezeigte erste Stufe 21 auf. Abweichend von der in Figur 2 dargestellten Ausführungsform ist zwischen dem Widerstand R2 und dem Anschluss 212 ein Kondensator CR2 vorgesehen, wobei ein Verbindungsknoten des Kondensators CR2 und des Widerstands R2 einen zusätzlichen Anschluss 212A bildet.

Der Kondensator CR2 wird im Betrieb der Anordnung durch einen Symmetrisierungsstrom durch den Widerstand R2 aufgeladen. Eine Spannung über den Kondensator CR2 zwischen den Anschlüssen 212, 212A kann als Hilfsspannung für Elemente, beispielsweise einen Controller, in der zweiten Stufe 22 verwendet werden. Der Kondensator CR2 wirkt dabei als Energiespeicher. Vorzugsweise entsprechen sich ungefähr die Spannung über den Widerstand R1 und die Spannung über die Serienschaltung aus Widerstand R2 und Kondensator CR2.

Ferner weist das Schaltmittel SA in Figur 3 im Unterschied zur Figur 2 keine Detektions- und Steuereinheit DC auf, so dass der Schalter SW beispielsweise über ein an einem Steuereingang 213 anliegendes Steuersignal umgeschaltet wird. Die Umschaltung zwischen der ersten und der zweiten Betriebsart kann somit durch ein extern bereitgestelltes Steuersignal durchgeführt werden.

Alternativ hierzu kann der Schalter SW auch als manueller Schalter oder als Kontaktbrücke ausgeführt sein, wobei in diesem Fall vor dem Betrieb der Steuerung eine entsprechende Einstellung des Schalters SW in Abhängigkeit einer zur Verfügung stehenden Netzspannung manuell vorzunehmen ist. Beispielsweise kann vor Montage oder Auslieferung der Steuerung an einem verstellbaren Möbel die Einstellung des Schalters SW unter Kenntnis einer am Einsatzort der Steuerung vorliegenden Netzwechselspannung fest eingestellt werden.

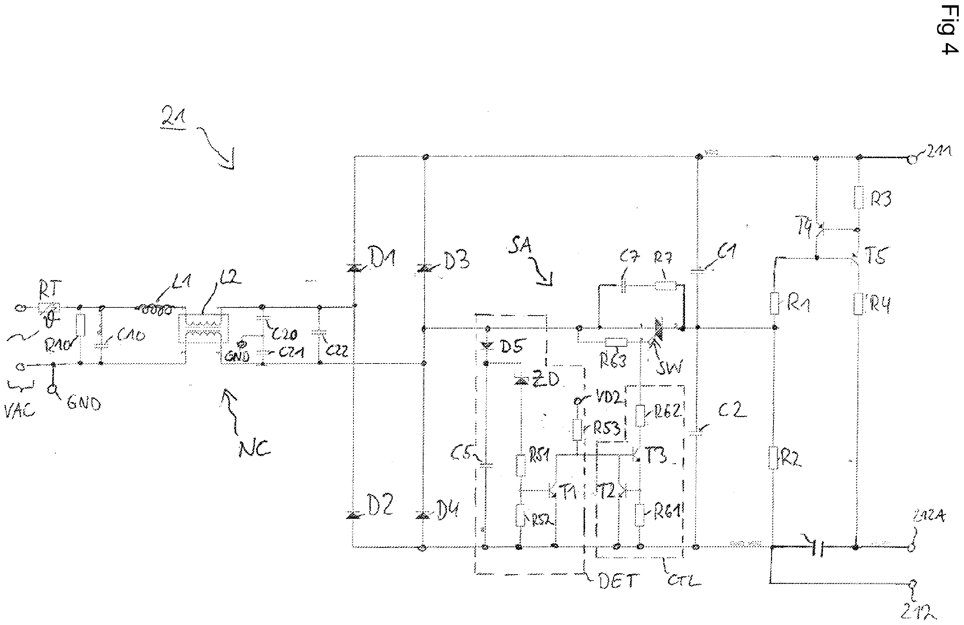

Figur 4 zeigt ein weiteres Ausführungsbeispiel einer ersten Stufe 21 eines Schaltnetzteils 2, welches in einer Steuerung gemäß dem Ausführungsbeispiel in Figur 1 einsetzbar ist. Zusätzlich zu den Elementen, die bereits aus den Ausführungsbeispielen in den Figuren 2 und 3 bekannt sind, weist die erste Stufe 21 in diesem Ausführungsbeispiel eine Netzkopplungsschaltung NC auf, welche die Dioden D1, D2, D3, D4 mit dem Netzanschluss VAC koppelt. Die Netzkopplungsschaltung NC weist dabei einen Widerstand R10, einen Kondensator C10 sowie Kondensatoren C20, C21 und C22 auf, welche zwischen die Netzanschlüsse geschaltet sind. Ferner sind in der Netzkoppelschaltung NC eine Spule L1 sowie eine Drosselspule L2 vorgesehen. Des Weiteren ist ein temperaturabhängiger Widerstand RT eingangsseitig in der Netzkoppelschaltung NC angeordnet. Ein Anschluss der Netzkoppelschaltung NC ist mit einem Bezugspotentialanschluss GND verbunden. Ein Verbindungsknoten der Kondensatoren C20, C21 ist ebenfalls mit dem Bezugspotenzialanschluss GND elektrisch verbunden.

Durch die Schaltungselemente R10, C10, C20, C21, C22 kann die elektromagnetische Verträglichkeit bzw. die EMV der vorliegenden Schaltung verbessert werden. Der Widerstand R10 dient dabei als Sicherheitsmaßnahme zum Entladen der Kondensatoren C10, C20, C21, C22 beim Trennen der Stufe 21 von der Netzspannung. Diese Maßnahme wird unterstützt durch die Drosselspule L2 und die Spule L1, die im Wesentlichen die Rückwirkungen des geschalteten Betriebs des Schaltnetzteils auf die Netzspannung durch Verringerung harmonischer Ströme reduzieren sollen. Der temperaturabhängige Widerstand RT, der vorzugsweise einen negativen Temperaturkoeffizienten (NTC) aufweist, dient zur Strombegrenzung bei Inbetriebnahme des Schaltnetzteils. Während des Betriebs des Schaltnetzteils können die Einflüsse des temperaturabhängigen Widerstands RT, der dann einen sehr niedrigen Widerstandswert aufweist, vernachlässigt werden.

Das Schaltmittel SA weist in diesem Ausführungsbeispiel eine Detektionseinrichtung DET und eine Ansteuereinrichtung CTL auf, welche den hier als Triac ausgeführten Schalter SW ansteuert. Die Detektionseinrichtung DET weist zwischen dem Verbindungsknoten der Dioden D3, D4 und dem zweiten Ausgangsanschluss 212 eine Serienschaltung einer Diode D5 und eines Kondensators C5 auf. Die Detektionseinrichtung DET umfasst zudem eine Zenerdiode ZD und Widerstände R51, R52, die mit der Zenerdiode ZD als Serienschaltung parallel zum Kondensator C5 geschaltet sind. Zudem weist die Detektionseinrichtung DET einen Transistor T1 auf, dessen Steueranschluss an einen Verbindungsknoten der Widerstände R51, R52 angeschlossen ist und dessen gesteuerte Strecke zwischen dem zweiten Anschluss 212 und über einen Widerstand R53 mit einem Versorgungsanschluss VD2 gekoppelt ist.

Die Ansteuerschaltung CTL weist einen zweiten und einen dritten Transistor T2, T3 sowie Widerstände R61, R62 auf. Dabei bilden der Widerstand R62, die gesteuerte Strecke des Transistors T3 und der Widerstand R61 einen Signalpfad zwischen einem Steuereingang des Schalters SW und dem zweiten Anschluss 212. Der Steueranschluss des Transistors T3 ist mit der Detektionseinrichtung DET und über die gesteuerte Strecke des Transistors T2 mit dem Anschluss 212 verbunden. Ein Steueranschluss des Transistors T2 ist mit einem Verbindungsknoten des Transistors T3 und des Widerstands R61 gekoppelt. Parallel zu dem Schalter SW ist eine Serienschaltung eines Widerstands R7 und eines Kondensators C7 vorgesehen. Ferner ist der Steueranschluss des Schalters SW über einen Widerstand R63 mit dem Verbindungsknoten der Dioden D3, D4 gekoppelt.

Abweichend von den vorherigen Ausführungsbeispielen ist der Widerstand R1 nicht direkt mit dem ersten Anschluss 211 verbunden, sondern über eine durch einen Transistor T4, einen Transistor T5 und einen Widerstand R3 gebildete Schaltung. Die gesteuerte Strecke des Transistors T5 ist dabei über einen Widerstand R4 mit einem zusätzlichen Anschluss 212A gekoppelt. Ein Kondensator CR4 zwischen den Anschlüssen 212, 212A wird durch den Strom durch den Widerstand R4 aufgeladen und dient als Energiespeicher. Beispielsweise können verschiedene Schaltungsteile mit der Spannung am Kondensator CR4 versorgt werden. Vom Anschluss 212A kann ferner die Spannung am Anschluss VD2 abgeleitet werden.

In der Detektionseinrichtung DET bilden die Diode D5 und der Kondensator C5 einen Spitzenwertgleichrichter. In Abhängigkeit der Zenerspannung der Zenerdiode ZD kann über einen durch die Widerstände R51, R52 gebildeten Spannungsteiler der Transistor T1 angesteuert werden. Eine Stromversorgung der gesteuerten Strecke des Transistors T1 erfolgt beispielsweise über den Versorgungsanschluss VD2. In einem von verschiedenen Ausführungsbeispielen kann die am Versorgungsanschluss VD2 anliegende Spannung von einem hier nicht gezeigten Schaltungsteil aus der zweiten Stufe 22 des Schaltnetzteils 2 bereitgestellt werden. Eine derartige Spannung liegt zwar unmittelbar nach dem Einschalten beziehungsweise der Inbetriebnahme des Schaltnetzteils nicht vor, stellt sich jedoch üblicherweise in sehr kurzer Zeit ein, so dass auch in diesem Fall die Versorgung des Transistors T1 gewährleistet ist.

Durch die Ansteuerschaltung CTL wird das von der Detektionseinrichtung DET bereitgestellte Signal in ein Steuersignal zur Ansteuerung des Schalters SW umgesetzt. Hierbei erfolgt jedoch keine periodische Ansteuerung des Triacs, sondern eine kontinuierliche Auf- beziehungsweise Zusteuerung dieses Schaltelementes. Der Widerstand R62 dient dabei als Schutzwiderstand. Der Widerstand R63 sorgt für ein sicheres Sperren des Triacs im ausgeschalteten Zustand. Vorzugsweise wird der Triac SW im zweiten beziehungsweise dritten Quadranten bezogen auf seine Steuerkennlinie getriggert, was einen niedrigeren Triggerstrom und damit eine geringere Steuerleistung zur Folge hat. Anders ausgedrückt bilden der Transistor T3 mit dem Widerstand R61 und dem Widerstand R53 eine gesteuerte Stromquelle zur Erzeugung eines Steuerstroms für den Schalter SW. Durch die Verwendung einer Stromquelle ergeben sich geringere Verluste in der Ansteuerung des Triacs.

Die RC-Serienschaltung R7, C7 dient zur dU/dt-Begrenzung während eines Umschaltvorgangs des Schalters SW. Wenn keine Netzspannung anliegt, beziehungsweise während eines Einschaltvorgangs ist der Triac SW vorzugsweise in einem ausgeschalteten, das heißt offenen Zustand.

Die Elemente R3, T4, T5 in Verbindung mit dem Widerstand R4 dienen zur Symmetrisierung der Spannungen über die Kondensatoren C1, C2, auch während eines Einschaltvorgangs. Sie können auch durch eine direkte oder über einen Widerstand ausgeführte Verbindung des Widerstands R1 mit dem Anschluss 211 ersetzt werden.

Mit den in Figur 4 dargestellten Ausführungsbeispielen lässt sich ein Schaltnetzteil realisieren, welches ohne ein Erfordernis einer manuellen Einwirkung sowohl bei Netzspannungen von zirka 230 Volt im europäischen Raum als auch von zirka 115 Volt im nordamerikanischen Raum eine im Wesentlichen gleiche Zwischenspannung an den Anschlüssen 211, 212 abgeben kann, die von einer zweiten Stufe 22 in die von einem Steuerteil benötigte Gleichspannung umwandelbar ist. Ein derartiges Schaltnetzteil weist sich insbesondere auch durch eine Kurzschlussfestigkeit aus, welche bei einem herkömmlichen Transformator nicht gegeben ist. Zudem zeichnet sich ein derartiges Schaltnetzteil durch ein geringeres Gewicht gegenüber einem herkömmlichen Transformator aus.

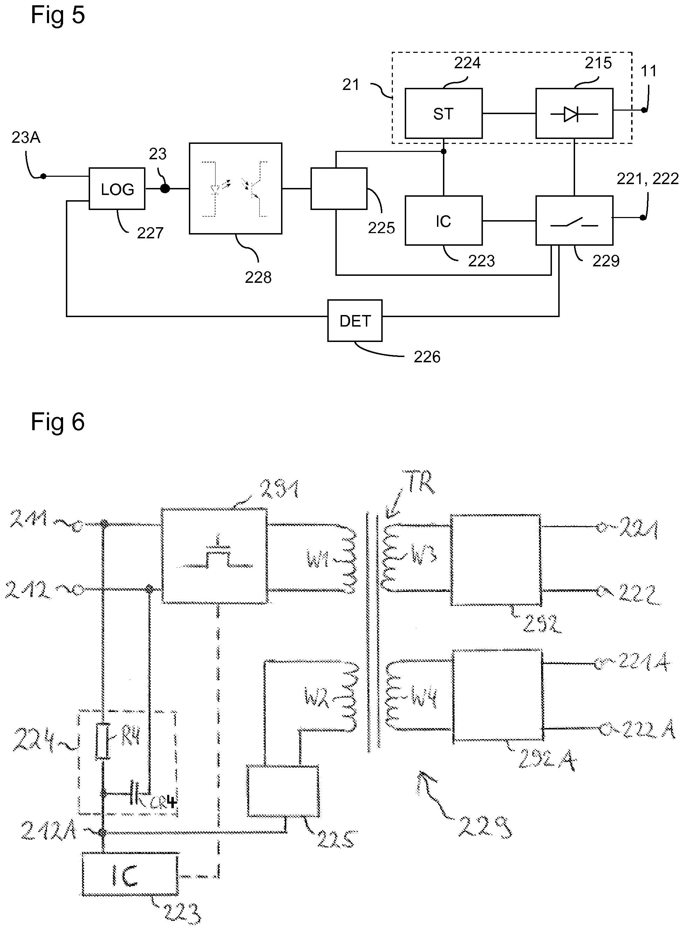

Figur 5 zeigt ein Ausführungsdetail eines Schaltnetzteils. In dem Blockschaltbild in Figur 5 sind ein Optokoppler 228, der eingangsseitig über ein logisches Element 227 mit dem Steuereingang 23 und einer Detektionsschaltung 226 und ausgangsseitig mit einer Betriebsversorgungsschaltung 225 verbunden ist, ein Schaltreglerbaustein 223, und die erste Stufe 21 dargestellt, die eine Anlaufschaltung 224 und einen Gleichrichterblock 215 umfasst. Die Anlaufschaltung 224 ist eingangsseitig mit einem Anschluss des Gleichrichterblocks 215 der ersten Stufe 21 verbunden, welche, wie zuvor beschrieben, elektrisch mit einem Netzanschluss 11 zur Zuführung der Netzwechselspannung gekoppelt ist. Mit Hilfe der Anlaufschaltung 224 wird eine Versorgungsspannung geringer Leistung für den Schaltreglerbaustein 223 bereitgestellt. Im Übrigen wird der Baustein 223 über eine Spannung versorgt, welche durch die Betriebsversorgungsschaltung 225 aus einer Hilfsspannung in den Schaltmitteln 229 abgeleitet wird, wobei die Versorgung über die Betriebsversorgungsschaltung in Abhängigkeit einer Ansteuerung durch den Optokoppler 228 zu- oder abgeschaltet werden kann.

Im regulären Betrieb, also einem Normalbetriebszustand oder Leistungsbetriebszustand, wird die Betriebsversorgungsschaltung 225 derart angesteuert, dass eine dauerhafte Versorgung des Bausteins 223 erfolgt. In diesem Betriebszustand steuert der Baustein 223 das Schaltmittel 229 an, sodass dieses aus der von der ersten Stufe 21 bereitgestellten Zwischenspannung unter anderem eine Gleichspannung an den Anschlüssen 221, 222 erzeugt. Eine Versorgung des Bausteins 223 durch die Anlaufschaltung 224 ist in dieser Betriebsart nicht notwendig.

Wenn das Schaltnetzteil durch ein entsprechendes Signal, beispielsweise das Bereitschaftssignal am Eingang 23 in einen Ruhebetriebszustand gesteuert werden soll, wird die Betriebsversorgungsschaltung 225 so angesteuert, dass der Baustein 223 nicht dauerhaft versorgt ist, sondern seine Energie aus der Anlaufschaltung 224 bezieht. Eine Ansteuerung des Schaltmittels 229 ist in diesem Betriebszustand nur über einen beschränkten Zeitraum möglich, da die von der Anlaufschaltung 224 bereitgestellte Energie nicht für einen dauerhaften Schaltbetrieb des Bausteins 223 ausreicht. Entsprechendes ist vorgesehen, wenn beispielsweise durch die Detektionsschaltung 226 eine überhöhte Spannung im Schaltmittel 229 detektiert wird.

Beispielsweise erfolgt eine Ansteuerung der Betriebsversorgungsschaltung 225 über das logische Element 227, den Anschluss 23 und den Optokoppler 228, wenn das Bereitschaftssignal am Eingang 23A empfangen und/oder durch die Detektionsschaltung 226 erzeugt wird, wenn eine Überspannung im Schaltmittel 229 detektiert wird. Das Bereitschaftssignal zur Steuerung in den Ruhebetriebszustand kann beispielsweise in einer Ruhephase von dem Steuerteil 3 erzeugt werden. Wegen des beschränkten Zeitraums der Versorgung durch die Anlaufschaltung 224 arbeitet der Baustein 223 im Ruhebetriebszustand anders ausgedrückt im Taktbetrieb. Dieser Taktbetrieb funktioniert mit Hilfe der Anlaufschaltung 224, welche den Baustein 223 kurz hochfahren lässt und nach kurzer Zeit wieder stoppt, wenn bzw. weil keine Versorgung des Bausteins 223 über die Betriebsversorgungsschaltung 225 vorhanden ist. Der Baustein 223 wird also periodisch initialisiert und wieder abgeschaltet.

Im Gegensatz zu einem Leerlauf im Leistungsbetriebszustand, bei dem lediglich keine Leistung über die ausgangsseitig abgegebene Gleichspannung abgenommen wird, aber dennoch Verlustleistung durch Umschaltvorgänge entsteht, wird bei einem Leerlauf im Ruhebetriebszustand die Leistungsaufnahme der Schaltungsanordnung deutlich reduziert, da die genannten Schaltverluste nicht auftreten. Während des Ruhebetriebszustands gibt das Schaltnetzteil zwar nach außen eine Spannung ab, die unter Umständen auch ausreicht, eine Elektronik des angeschlossenen Steuerteils zu versorgen, nicht aber deren Leistungsteil. Um den Normalbetrieb oder Leistungsbetrieb wieder aufzunehmen, ist es erforderlich, dass das Schaltnetzteil 2 wieder entsprechend aktiviert wird.

Mit dem beschriebenen Ruhebetriebszustand kann somit der Leistungsbedarf des Schaltnetzteils so reduziert werden, dass beispielsweise bestimmte gesetzliche Umweltnormen, wie zum Beispiel Green Label, erfüllt werden.

Figur 6 zeigt ein weiteres Ausführungsdetail aus einem Schaltnetzteil. Im Blockschaltbild in Figur 6 sind ein Schalttransistorblock 291, der eingangsseitig an die Anschlüsse 211, 212 und ausgangsseitig an eine erste Wicklung W1 eines Transformators TR angeschlossen ist, die Anlaufschaltung 224, der Schaltreglerbaustein 223, die Betriebsversorgungsschaltung 225 und Schaltungsblöcke 292, 292a dargestellt. Die Betriebsversorgungsschaltung 225 ist eingangsseitig an Wicklungen W2 des Transformators TR angeschlossen. Die Wicklungen W1, W2 stellen eine Primärseite des Transformators TR dar, während Wicklungen W3, W4 sekundärseitig angeordnet sind und an die Schaltungsblöcke 292, 292a angeschlossen sind. Ein Ausgang der Betriebsversorgungsschaltung 225 ist an den Anschluss 212A gekoppelt, welcher an einen Versorgungsspannungseingang des Bausteins 223 angeschlossen ist. Ferner ist an den Anschluss 212A die Anlaufschaltung 224 angeschlossen, welche den Widerstand R4 umfasst, der den Anschluss 211 mit dem Anschluss 212A verbindet, und den Kondensator CR4, der den Anschluss 212 mit dem Anschluss 212A verbindet. Eine Ansteuerung der Transistorschalter im Block 291 erfolgt durch den Schaltreglerbaustein 223. Mit Verweis auf Figur 5 sind der Transformator TR und die Schaltungselemente 291, 292, 292a vom Schaltmittel 229 umfasst.

Im Ruhebetriebszustand wird der Kondensator CR4 über einen Strom aufgeladen, der sich aus der Zwischenspannung am Anschluss 211 und dem Widerstand R4 ergibt. Wenn ein bestimmter Spannungswert im Kondensator CR4 erreicht ist, beginnt der Schaltreglerbaustein 223 sich zu initialisieren, um einen Schaltbetrieb beziehungsweise eine Ansteuerung der Transistorschalter im Schalttransistorblock 291 vorzunehmen. Jedoch ist der Strombedarf des Bausteins 223 größer als der Ladestrom durch den Widerstand R4, sodass es zu einer Entladung des Kondensators CR4 kommt. Falls demnach keine Spannungsversorgung zusätzlich über die Betriebsversorgungsschaltung 225 erfolgt, wird der Baustein 223 wieder heruntergefahren und der Kondensator CR4 erneut aufgeladen. Eine Ansteuerung der Betriebsversorgungsschaltung 225 erfolgt beispielsweise wiederum durch einen hier aus Übersichtsgründen nicht dargestellten Optokoppler 228, der ein Bereitschaftssignal übertragen kann. Somit ergibt sich eine periodische Ladung und Entladung des Kondensators CR4 beziehungsweise ein periodischer Betrieb des Bausteins 223 im Ruhebetriebszustand.

Wenn die Betriebsversorgungsschaltung 225 jedoch in den Normalbetriebszustand geschaltet wird, werden durch initiale Schaltvorgänge im Schalttransistorblock 291 ein Strom in der Wicklung W1 bewirkt und eine Spannung in der Wicklung W2 induziert, welche als Hilfsspannung für die Betriebsversorgungsschaltung 225 dient, aus der die Versorgungsspannung am Anschluss 212A abgeleitet werden kann. Diese Spannung reicht für einen Dauerbetrieb des Bausteins 223 und damit des Schaltnetzteils aus. Sekundärseitig werden dementsprechend Spannungen in den Wicklungen W3, W4 induziert, welche durch die Schaltungsteile 292, 292a in die Gleichspannung an den Anschlüssen 221, 222 beziehungsweise eine zusätzliche Gleichspannung an den Anschlüssen 221a, 222a umgesetzt werden.

In der Ruhephase im Ruhebetriebszustand ist der Trafo TR im Wesentlichen unbelastet, sodass der Trafo TR, der sich im Normalbetriebszustand beispielsweise durch Kernverluste aufwärmt, vollständig abkühlen kann. Somit kann der Trafo TR während des Normalbetriebs mit vergleichsweise höherer Leistung betrieben werden. Anders ausgedrückt kann der Transformator TR verglichen mit einem herkömmlichen Schaltnetzteil für eine geringere Dauerbelastung ausgelegt werden. Durch den Ruhebetriebszustand werden jedoch nicht nur der Transformator, sondern auch andere Bauelemente des Schaltnetzteils weniger thermisch belastet.

Der Transformator TR weist beispielsweise Wicklungen mit größeren Wicklungsdrahtdurchmessern auf, wodurch die Strombelastbarkeit des Transformators erhöht wird. Gleichzeitig können jedoch geringere Wicklungszahlen im Transformator vorgesehen werden. Dadurch weist der Transformator eine niedrige Induktivität auf, welche einen höheren Magnetisierungsstrom und damit höhere Kernverluste bedingt, die bei Dauerbetrieb ungünstig wären. Da aber während der Aufladezeit des Kondensators CR4 der Regler nicht arbeitet und daher auch kein Magnetisierungsstrom fließt, sind die im Vergleich zu einem herkömmlichen Transformator höheren Kernverluste wegen des Ruhebetriebszustands vertretbar beziehungsweise vernachlässigbar. Anders ausgedrückt kann sich der Transformator TR durch den Ruhebetriebszustand jedoch ausreichend abkühlen. Bei einem herkömmlichen Schaltnetzteil fließt nämlich ein Magnetisierungsstrom im entsprechenden Transformator auch dann, wenn sekundär kein Strom entnommen wird. In diesem Fall würde sich der Transformator auch im Leerlauf erwärmen.

In einer Ausführungsform des Transformators TR wird ein Wicklungsdrahtdurchmesser des Transformators durch Parallelschalten mehrerer dünner Drähte erhöht. Dies führt zu einer verbesserten Stromverteilung in den Wicklungen, da auf Grund der Stromverdrängung bei den üblicherweise auftretenden Frequenzen ein einzelner Draht mit größerem Wicklungsdrahtdurchmesser ungleichmäßig belastet werden würde.

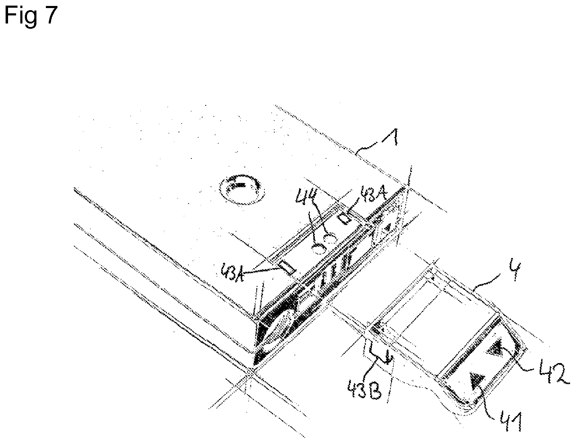

Figur 7 zeigt ein Ausführungsbeispiel eines Gehäuses 1 für eine Steuerung gemäß einem der oben beschriebenen Ausführungsbeispiele. An das Gehäuse 1 ist ein Bedienteil 4 befestigbar, welches zusammen mit dem Gehäuse 1 dann eine integrierte Einheit bildet. Beispielsweise weist das Bedienteil 4 Teile einer Schnappverbindung 43B auf, welche in entsprechende Öffnungen 43A des Gehäuses 1 einrastbar sind.

Eine Übertragung von Steuerbefehlen, welche über die Bedienelemente 41, 42 gegeben werden können, kann beispielsweise rein mechanisch durch Öffnungen 44 im Gehäuse 1 erfolgen. Alternativ zu der Schnappverbindung 43A, 43B kann das Bedienteil 4 auch mit hier nicht dargestellten Schraubverbindung an dem Gehäuse 1 befestigt werden, um eine integrierte Einheit zu bilden.

Abweichend von der in Figur 7 dargestellten Weise kann ein Bedienteil 4 auch oben auf dem Gehäuse 1 befestigt werden. Beispielsweise lässt sich das Bedienteil 4 von oben an dem Gehäuse 1 mit einer entsprechenden Schnappverbindung oder Schraubverbindung anbringen. Auch in diesem Fall kann eine Übertragung von Steuerbefehlen rein mechanisch durch Öffnungen im Gehäuse 1 erfolgen.

Somit ist es insgesamt möglich, ein Gehäuse, das bauartbedingt wegen des Schaltnetzteils mit geringen Ausmaßen aufgebaut sein kann, in einfacher Weise unterhalb einer Tischplatte an einem verstellbaren Tisch so zu befestigen, dass lediglich das mit dem Gehäuse integrierte Bedienteil unter der Tischkante hervorschaut.

## Patentansprüche

1. Steuerung mit einem Steuerteil (3), das zur Ansteuerung eines elektrisch verstellbaren Möbels eingerichtet ist, und einem das Steuerteil (3) versorgenden Schaltnetzteil (2), die in ein gemeinsames Gehäuse (1) der Steuerung integriert sind;
- wobei das Schaltnetzteil (2) eine erste und eine zweite Stufe (21, 22) aufweist, wobei die erste Stufe (21) eingerichtet ist, eine Zwischenspannung aus einer am Schaltnetzteil (2) eingangsseitig anliegenden Netzspannung zu erzeugen und wobei die zweite Stufe (22) eingerichtet ist, mit einem Schaltreglerbaustein (223) in geschaltetem Betrieb aus der Zwischenspannung eine Gleichspannung zu erzeugen, die dem Steuerteil (3) zur Erzeugung wenigstens einer Ausgangsspannung der Steuerung zugeführt wird;
- wobei das Schaltnetzteil (2) eingerichtet ist, in Abhängigkeit eines Bereitschaftssignals in einen Ruhebetriebszustand geschaltet zu werden;
**dadurch gekennzeichnet, dass**
- das Schaltnetzteil (2) eingerichtet ist, eine Versorgungsspannung für den Schaltreglerbaustein (223) in dem Ruhebetriebszustand durch eine Anlaufschaltung (224), die einen Energiespeicher (CR4) und ein Widerstandselement (R4) aufweist, in einem getakteten Betrieb des Schaltreglerbausteins (223) bereitzustellen und in einem Normalbetriebszustand durch eine Betriebsversorgungsschaltung (225) dauerhaft bereitzustellen;
- der Energiespeicher (CR4) und das Widerstandselement (R4) mit Ausgangsanschlüssen der ersten Stufe (21) gekoppelt sind, an denen die Zwischenspannung bereitgestellt wird;
- der Energiespeicher (CR4) im Ruhebetriebszustand über einen Strom aufgeladen wird, der sich aus der Zwischenspannung und einem Widerstand des Widerstandselements (R4) ergibt;
- sich der getaktete Betrieb durch periodisches Aufladen und Entladen des Energiespeichers (CR4) ergibt;
- die Anlaufschaltung (224) in dem getakteten Betrieb im Ruhebetriebszustand den Schaltreglerbaustein (223) periodisch initialisiert und wieder abschaltet, so dass ein schneller Wechsel in den Normalbetriebszustand ermöglicht wird; und
- der Energiespeicher (CR4) und das Widerstandselement (R4) derart dimensioniert sind, dass im Ruhebetriebszustand eine Zeitspanne zum Aufladen des Energiespeichers (CR4) größer ist als eine Zeitspanne zum Entladen des Energiespeichers (CR4) durch den Schaltreglerbaustein (223).

2. Steuerung nach Anspruch 1, bei der die Anlaufschaltung (224) eingerichtet ist, die Versorgungsspannung für den Schaltreglerbaustein (223) aus der Zwischenspannung abzuleiten.

3. Steuerung nach Anspruch 1 oder 2, bei der die Betriebsversorgungsschaltung (225) eingerichtet ist, die Versorgungsspannung für den Schaltreglerbaustein (223) aus einer Hilfsspannung in der zweiten Stufe (22) abzuleiten.

4. Steuerung nach einem der Ansprüche 1 bis 3, bei der die Betriebsversorgungsschaltung (225) in Abhängigkeit des Bereitschaftssignals deaktivierbar ist.

5. Steuerung nach Anspruch 4, bei der das Bereitschaftssignal der Betriebsversorgungsschaltung (225) über einen Optokoppler (228) zuführbar ist.

6. Steuerung nach einem der Ansprüche 1 bis 5, bei der das Bereitschaftssignal von dem Steuerteil (3) in Abhängigkeit eines Lastzustands und/oder von der zweiten Stufe (22) in Abhängigkeit eines Werts der Gleichspannung erzeugt wird.

7. Steuerung nach einem der Ansprüche 1 bis 6, bei der die zweite Stufe (22) einen Transformator (TR) umfasst, dessen Wicklungen (W1, W2, W3, W4) für eine Kurzzeitbelastung ausgelegt sind.

8. Steuerung nach einem der Ansprüche 1 bis 7, bei der die erste Stufe (21) eingerichtet ist, eine erste oder eine wenigstens zweite Betriebsart einzunehmen, und ein Schaltmittel (SA) zum Umschalten zwischen der ersten und der wenigstens einen zweiten Betriebsart aufweist, wobei beim Erzeugen der Zwischenspannung in der ersten Betriebsart eine Einweggleichrichtung und in der wenigstens einen zweiten Betriebsart eine Zweiweggleichrichtung durchgeführt wird.

9. Steuerung nach Anspruch 8, bei der das Schaltmittel (SA) zum Umschalten zwischen der ersten und der wenigstens einen zweiten Betriebsart in Abhängigkeit eines Spannungswerts der Netzspannung eingerichtet ist.

10. Steuerung nach Anspruch 8 oder 9, bei der das Schaltmittel (SA) aufweist
- eine Detektionseinrichtung (DET) zum Detektieren wenigstens eines durch einen Referenzwert festgelegten Spannungsbereichs der Netzspannung;
- eine Ansteuereinrichtung (CTL) zum Erzeugen eines Steuersignals in Abhängigkeit des wenigstens einen detektierten Spannungsbereichs; und
- einen Schalter (SW) zum Auswählen der Betriebsart in Abhängigkeit des Steuersignals.

11. Steuerung nach einem der Ansprüche 8 bis 10, bei der eine Spannungsversorgung des Schaltmittels (SA) durch die zweite Stufe (22) erfolgt.

## Claims

1. Controller having a control part (3) which is configured for controlling an electrically adjustable piece of furniture, and a switched-mode power supply (2) which supplies the control part (3) and is integrated in a common housing (1) of the controller;
- wherein the switched-mode power supply (2) has a first and a second stage (21, 22), wherein the first stage (21) is configured to generate an intermediate voltage from a mains voltage applied to the switched-mode power supply (2) on the input side, and wherein the second stage (22) is configured to use a switching regulator module (223) in switched operation to generate from the intermediate voltage a DC voltage which is supplied to the control part (3) for generating at least one output voltage of the controller;
- wherein the switched-mode power supply (2) is configured to be switched to an idle operating state depending on a standby signal;
**characterized in that**
- the switched-mode power supply (2) is configured to provide a supply voltage for the switching regulator module (223) in the idle mode by a start-up circuit (224) that comprises an energy store (CR4) and a resistive element (R4) in a clocked mode of the switching regulator module (223) and to provide it permanently in a normal mode by an operating supply circuit (225);
- the energy store (CR4) and the resistive element (R4) are coupled to output terminals of the first stage (21) at which the intermediate voltage is provided;
- the energy store (CR4) is charged in the idle state via a current resulting from the intermediate voltage and a resistance of the resistive element (R4);
- the clocked operation results from periodically charging and discharging the energy store (CR4);
- the start-up circuit (224) periodically initializes the switching regulator module (223) and switches it off again in the clocked mode in the idle mode, so that a rapid transition to the normal mode is made possible; and
- the energy store (CR4) and the resistance element (R4) are dimensioned such that, in the idle mode, a period of time for charging the energy store (CR4) is greater than a period of time for discharging the energy store (CR4) by the switching regulator module (223).

2. Controller according to claim 1, wherein the start-up circuit (224) is configured to derive the supply voltage for the switching regulator module (223) from the intermediate voltage.

3. Controller according to claim 1 or 2, wherein the operating supply circuit (225) is configured to derive the supply voltage for the switching regulator module (223) from an auxiliary voltage in the second stage (22).

4. Controller according to one of claims 1 to 3, wherein the operating supply circuit (225) is deactivatable as a function of the standby signal.

5. Controller according to claim 4, wherein the standby signal is feedable to the operating supply circuit (225) via an optocoupler (228).

6. Controller according to one of claims 1 to 5, wherein the standby signal is generated by the control part (3) as a function of a load state and/or by the second stage (22) as a function of a value of the DC voltage.

7. Controller according to one of claims 1 to 6, wherein the second stage (22) comprises a transformer (TR) whose windings (W1, W2, W3, W4) are designed for a short-term load.

8. Controller according to one of claims 1 to 7, wherein the first stage (21) is configured to adopt a first or at least a second mode of operation and comprises switching means (SA) for switching between the first and the at least a second mode of operation, wherein when generating the intermediate voltage in the first mode of operation a one-way rectification is performed and in the at least a second mode of operation a two-way rectification is performed.

9. Controller according to claim 8, wherein the switching means (SA) is configured to switch between the first and the at least one second mode of operation as a function of a voltage value of the mains voltage.

10. Controller according to claim 8 or 9, wherein the switching means (SA) comprises
- detection means (DET) for detecting at least one voltage range of the mains voltage defined by a reference value;
- driving means (CTL) for generating a control signal as a function of the at least one detected voltage range; and
- a switch (SW) for selecting the mode of operation depending on the control signal.

11. Controller according to one of claims 8 to 10, wherein a power supply of the switching means (SA) is provided by the second stage (22).

## Revendications

1. Commande comportant une partie de commande (3) destinée à commander un meuble à réglage électrique et une alimentation à découpage (2) qui alimente la partie de commande (3) et qui est intégrée dans un boîtier commun (1) de la commande;
- l'alimentation à découpage (2) présentant un premier et un deuxième étage (21, 22), le premier étage (21) étant conçu pour générer une tension intermédiaire à partir d'une tension de réseau qui est appliquée à l'alimentation à découpage (2) du côté entrée, et le deuxième étage (22) étant conçu en utilisant un module régulateur à découpage (223) pour générer une tension continue à partir de la tension intermédiaire en fonctionnement commuté, laquelle tension continue est fournie à la partie de commande (3) pour générer au moins une tension de sortie de la commande;
- l'alimentation à découpage (2) étant configurée pour être commutée à l'état de repos en fonction d'un signal de veille;
**caractérisé en ce que**
- l'alimentation à découpage (2) est conçue pour fournir une tension d'alimentation pour le module régulateur à découpage (223) à l'état de fonctionnement à vide par un circuit de démarrage (224), qui présente un accumulateur d'énergie (CR4) et un élément de résistance (R4), en fonctionnement synchronisé du module régulateur à découpage (223) et pour le fournir en permanence dans un fonctionnement normal par un circuit d'alimentation (225);
- l'accumulateur d'énergie (CR4) et l'élément de résistance (R4) sont couplés aux bornes de sortie du premier étage (21) auquel la tension intermédiaire est fournie;
- l'accumulateur d'énergie (CR4) est chargé à l'état de repos par un courant qui résulte de la tension intermédiaire et d'une résistance de l'élément de résistance (R4);
- le fonctionnement cadencé résulte du chargement et du déchargement périodiques de l'accumulateur d'énergie (CR4) ;
- le circuit de démarrage (224) initialise périodiquement le module régulateur à découpage (223) en fonctionnement cadencé à l'état de repos et le coupe à nouveau, de sorte qu'un passage rapide à l'état de fonctionnement normal soit possible; et
- l'accumulateur d'énergie (CR4) et l'élément de résistance (R4) sont dimensionnés de telle sorte qu'en l'état de repos, une période de temps pour charger l'accumulateur d'énergie (CR4) est supérieure à une période de temps pour décharger l'accumulateur d'énergie (CR4) par le module régulateur à découpage (223).

2. Commande selon la revendication 1, dans laquelle le circuit de démarrage (224) est configuré pour dériver la tension d'alimentation du module régulateur à découpage (223) de la tension intermédiaire.

3. Commande selon la revendication 1 ou 2, dans laquelle le circuit d'alimentation (225) est configuré pour dériver la tension d'alimentation du module régulateur a découpage (223) d'une tension auxiliaire au deuxième étage (22).

4. Commande selon l'une des revendications 1 à 3, dans laquelle le circuit d'alimentation (225) peut être désactivé en fonction du signal de veille.

5. Commande selon la revendication 4, dans laquelle le signal de veille peut être envoyé au circuit d'alimentation (225) via un optocoupleur (228).

6. Commande selon l'une des revendications 1 à 5, dans laquelle le signal de veille est généré par la partie de commande (3) en fonction d'un état de charge et/ou par le deuxième étage (22) en fonction d'une valeur de la tension continue.

7. Commande selon l'une des revendications 1 à 6, dans laquelle le deuxième étage (22) comprend un transformateur (TR) dont les enroulements (W1, W2, W3, W4) sont conçus pour une charge de courte durée.

8. Commande selon l'une des revendications 1 à 7, dans laquelle le premier étage (21) est configuré pour prendre un premier ou au moins un second mode de fonctionnement et comporte un moyen de commutation (SA) pour commuter entre le premier et le au moins un second mode de fonctionnement, un redressement unidirectionnel étant effectué lorsque la tension intermédiaire est générée dans le premier mode de fonctionnement et un redressement bidirectionnel étant exécuté dans le au moins un second mode de fonctionnement.

9. Ccommande selon la revendication 8, dans laquelle le moyen de commutation (SA) est configuré pour commuter entre le premier et au moins un second mode de fonctionnement en fonction d'une valeur de tension de la tension du réseau.

10. Commande selon la revendication 8 ou 9, dans laquelle le moyen de commutation (SA) comporte
- des moyens de détection (DET) pour détecter au moins une plage de tension de la tension secteur définie par une valeur de référence;
- des moyens d'entraînement (CTL) pour générer un signal de commande en fonction de l'au moins une plage de tension détectée; et
- un interrupteur (SW) pour sélectionner le mode de fonctionnement en fonction du signal de commande.

11. Commande selon l'une des revendications 8 à 10, dans laquelle une alimentation en tension des moyens de commutation (SA) est effectuée par le deuxième étage (22).
